# EUROPEAN PATENT APPLICATION

(11) **EP 2 270 940 A2**
(43) Date of publication of application: **05.01.2011**
(21) Application number: 10167880.3
(22) Date of filing: 30.06.2010
(51) Int. Cl.: H02G 3/08

(54) **Membranous shield**

(30) Priority: 30.06.2009 DK 200900811
(71) Applicant: Dafa A/S, 8220 Brabrand (DK)
(72) Inventor: Andersen, Heide Borup, 8260 Viby J (DK)
(74) Representative: Tellefsen, Jens J.

(57) **Abstract**

This invention describes a membranous shield for sealing devices penetrating vapour barriers; said device comprises an element and possibly one or more lead-ins **characterised in that** said membranous shield comprises a membrane; said membrane is a three-dimensionally shaped element comprising sides connected to a bottom; said membrane further comprises an outer flange; said outer flange is two-dimensional and connected to said sides opposite to said bottom; said outer flange is provided with means for attachment to said vapour barrier.

## Description

### Field of the Invention

The present invention relates to sealing of a vapour barrier in relation to penetration hereof by devices.

### Background of the Invention

The indoor climate is of importance for the health and well-being of the persons and animals staying or residing inside the building. Furthermore, the durability of building materials composed of organic material such as wood is prolonged by preventing warm moistures air to travel from places with high temperatures to places with lower temperatures.

Problems arise when there is a significant temperature or vapour pressure differential from inside to out, which especially in northern climates may be a problem. Interior or exterior moisture penetrates into and condenses in unheated attics, basements, crawl-spaces, and wall cavities and causes the rotting of wood members, mould and fungus growth, and peeling or lifting of exterior paint.

Installing a vapour barrier prevents moisture from penetrating from the inside or outside to a place where it reaches a dew point since the vapour barrier physically prevents the moistures air in travelling. The efficiency of the vapour barrier is dependent upon the mounting of the vapour barrier. Incorrect mounting or leaking due to torn vapour barrier is more damaging than lack of vapour barrier since leakage may lead to an air flow through the membrane. The air will typically contain moisture, which moisture may condensate in the insulation material and thereby render the insulation useless in an area around the leak, which can give rise to a thermal bridge, rot or other detrimental effects. Thus, it is a must that all penetrations through the vapour barrier are efficiently sealed in order to prevent air transport and airtightness according to building regulations.

Recently the authorities in Denmark among other countries has introduced standards relating to the building code, according to which a building shall be able to resist a certain interior over-pressure relative to ambient pressure outside the building, being a measurement of how well a building structure is sealed. This in combination with requirements to insulation values, window areas and other factors help to limit the energy consumption, while maintaining a comfortable indoor climate.

EP 1 959 531 describes an electrical installation box where the introduction of cables or wires into the box is sealed. The cables or wires are transferred into the box through a humidity-impermeable membrane, hereby avoiding leakage of air and moisture due to the lead-ins of cables or wires into the electrical installation box from the outside environment.

CA 1,305,778 describes an electrical outlet box for use in combination with a vapor barrier of flexible material. The electrical outlet box is arranged in the wall or ceiling and hereby penetrates the vapour barrier. By installation of the electrical outlet box the vapour barrier is pulled over the front of the electrical outlet box and an opening corresponding to the front of the electrical outlet box is made in the vapour barrier. In order to seal the vapour barrier to the electrical outlet box a frame is arranged onto the front of the electrical outlet box whereby the vapour barrier is clamped. Efficient sealing between the electrical outlet box and the vapour barrier is, thus, obtained. However, the electrical outlet box itself can be an object of increased transport of air and moisture from one side of the vapour barrier to the other side.

### Object of the Invention

It is the object of the present invention to obtain a sealing, which is easy to install and further prevents any transport of moisture or air past a penetrated vapour barrier or via the device penetrating the vapour barrier.

### Description of the Invention

This invention describes a membranous shield for sealing devices penetrating vapour barriers; said device comprises an element and possibly one or more lead-ins, where said membranous shield comprises a membrane, said membrane is a three-dimensionally shaped element comprising sides connected to a bottom; said membrane further comprises an outer flange, said outer flange is two-dimensional and connected to said sides opposite to said bottom, and said outer flange is provided with means for attachment to said vapour barrier.

In the following, the term device can to be interpreted as an element without lead-ins as well as an element comprising one or more lead-ins.

The membranous shield is, at use, to be an integrated part of the vapour barrier. The side or sides of the three-dimensionally shaped element is connected to each other as well as to the bottom to form a semi-open enclosure leaving just the front open. Hereby, it is to be understood that the front is arranged opposite of the bottom. Furthermore, it is to be understood that the number of sides of the three-dimensionally shaped element depends of the overall shape of the element.

A flange is connected to the sides opposite of the bottom. This flange turns to the outside of the three-dimensionally shaped element in order to be attached to the vapour barrier by the means for attachment. The means for attachment is to be an efficient form for sealing the closure between the vapour barrier and the membranous shield in order to prevent any leakage of air or moisture through the sealing.

The means for attachment to the vapour barrier can for example be an adhesive preferably an acryl-containing adhesive. This acryl-containing adhesive is a highly sticky adhesive, which is especially developed for sealing and laminating vapour barriers of polyethylene and polypropylene. Furthermore, this adhesive is known to be stable within a wide temperature range, such as from -40 to +100 degrees Celsius. The adhesive is hence widely known and tested in accordance with the regulations regarding vapour barriers. This adhesive is advantageous of the form of vapour barrier tape as distributed by DAFA. Other preferred means for attachment can be additional vapour barrier tapes, adhesive on one or two sides.

The device, which is to be inserted into the wall, floor, ceiling or the like, and hereby is to penetrate the vapour barrier, can be inserted into the three-dimensionally shaped element from the front of the element. The device is then enclosed by the three-dimensionally shaped element and any air or moisture travelling through the device is prevented by the three-dimensionally shaped element to slip past this element and, thus, past the vapour barrier.

In a further advantageous embodiment of the membranous shield for sealing devices penetrating through vapour barriers where the three-dimensional shape has a cross-section comprising at least three-edges such as a circle, an oval, a rectangle, a triangle or a square.

The three-dimensional shape of the membranous shield can be of multiple variations. Preferably, the three-dimensional shape of the membranous shield is chosen to fit the three-dimensional shape of the device to be inserted into the membranous shield. Hence, the three-dimensional shape of the membranous shield can take any shape to fit any shape thinkable of devices to be inserted. However, preferred are shapes where the cross-section comprises at least three-edges such as a circle, a rectangle, a triangle, a square, or an oval. The cross-section is here to be understood as the cross-section corresponding to the front of the semi-open enclosure i.e. the cross-section is substantially parallel to the vapour barrier.

The three-dimensionally shape is preferably a cylinder, broadly interpreted. In this sense, the cylinder is cross-sections spanned by a one-parameter family of parallel lines. In this sense, when the cross-section is e.g. a rectangle or a square the cylinder would be a box. In an additional embodiment, the cross-sectional area can be larger or smaller than the area of the bottom.

In a still further advantageous embodiment, the membranous shield for sealing devices penetrating through vapour barriers is made from a single piece of membrane.

The purpose of the membranous shield is to prevent the transport of air or moisture from one side of a vapour barrier to the other. Each time the membrane is cut and joint in order to form the three-dimensional shape in question the risk of leakage is increased. Thus, the smaller the number of joints is, the smaller the risk of leakage.

Forming the three-dimensionally shaped element from one piece of membrane further decreases the number of joints necessary, than shaping the element from multiple pieces like separate sides and bottom. Hence, the use of only one piece of membrane is preferred.

As an alternative, the shape of the membranous shield formed from one piece of membrane can be formed without any joints and cuts in the membrane e.g. as a bag where the outer edge comprises the flange which attaches to the vapour barrier and the piece of membrane is just folded to form an enclosure. As a further alternative the membrane can be joined into a certain three-dimensional shape like a box by attaching the appropriate areas of the membrane but without removing additional material, and hereby cutting the membrane.

Alternatively, the membrane can be moulded into the given shape or edges can be welded together to form a given shape. The welding is preferably done after removal of material, which is to be in excess when forming the membrane into a given shape. The moulding can for example be performed by vacuum moulding or injection moulding.

In a still further advantageous embodiment, the membranous shield further comprises one or more flexible and/or elastic areas, where said flexible and/or elastic areas comprises one or more pre-punched markers, said pre-punched marker is punched partly through the flexible and/or elastic area, preferably 50%, and that said one or more pre-punched markers are slightly smaller than said one or more lead-ins; said one or more lead-ins penetrates said membranous shield.

A multiple of devices to be installed into the membranous shield are to be connected to cables or wires e.g. electrical cables. Hereby, the membranous shield is to be penetrated by the cables or wires and, thus, a possibility for obtaining leakage is created. Introducing certain flexible and/or elastic areas with pre-punched markers seals the penetration of the lead-ins e.g. cables and wires. Preferred diameters of the pre-punched markers are in the range between 1 mm to 60 mm, more preferred are diameters of 1 mm, 2 mm, 3 mm, and 7 mm, most preferred are diameters of 3 mm and 7 mm. It is to be emphasized the other sizes in the range can be an option as well.

In order to obtain an efficient and competent closure at the penetration area of the lead-ins of cables, pipes and tubes through a vapour barrier the closure around the cables, pipes and tubes is to be fitted tightly. This is achieved by providing the pre-punched markers with a smaller size as compared to the size of the cables, pipes and tubes. The flexible and/or elastic characteristics of the material enable the cables, pipes and tubes to be pushed through the material. The minimal size of the opening results in a tight fit between the sealing collar and the lead-in preventing air leakage. Preferably, the diameter of the pre-punched markers are 15-70% smaller than the diameter of the lead-ins. More specifically, preferred pre-punched markers with a diameter of either 3 mm or 7 mm is around 40-88% smaller than the diameter between 5-25 mm of the standard measures of the cables, and the pre-punched marker with a diameter of 60 mm is around 25-52% smaller than the diameter between 80-125 mm of the standard measures of the tubes, which cables or tubes are to be punched through the marker.

In addition, the pre-punching of more markers within the same flexible and/or elastic area is possible, since the degree of pre-punching, preferably around 50%, is so low that air leakage is prevented when the additionally pre-punched markers are not used.

The flexible and/or elastic areas is made of material of a thickness preferably between 0.2 and 2.0 mm, more preferred between 1.0 and 1.5 mm, most preferred between 1.1 and 1.3 mm.

If the material of the flexible and/or elastic areas is to thin, air leakage is more likely to happen due to insufficient closure/contact with the lead-ins as well as the leakiness of the flexible and/or elastic area itself. Thus, a correct thickness is of major importance.

Preferably the material of the flexible and/or elastic area is selected from ethylene propylene diene monomer rubber, nitrile rubber, neoprene and/or natural rubber. Other flexible and/or elastic materials are also to be considered, the four mentioned are only examples of such.

In a still further advantageous embodiment, one or more pre-punched markers are arranged in a separate material; said separate material is attached to said membrane.

Preferably, the pre-punched markers are made in a material separate from the material of the membrane. The areas comprising at least one pre-punched marker is, thus, to be separately attached to the membrane in order to form a membranous shield. The areas comprising at least one pre-punched marker can be attached by e.g. an adhesive like acryl-containing adhesive to the membrane.

Alternatively, small pockets can be arranged on the membrane where the pockets are attached to the membrane and the areas comprising at least one pre-punched marker can be inserted into the pocket. Preferably, the membrane is removed in the area covered by the area comprising at least one pre-punched marker.

Hereby, large flexibility is obtained as to where the pre-punched markers are to be arranged. Furthermore, the choice of material for both the membrane and the areas comprising at least one pre-punched markers can be chosen in a more optimal manner since the materials can be chosen separately and be optimized for each of their separate purposes i.e. the material of the membrane to prevent leakage from the partly surrounded device inserted into the semi-open enclosure and the pre-punched markers to prevent leakage due to penetration of the membrane.

In a still further advantageous embodiment, said one or more pre-punched markers are arranged at the sides and/or bottom of said membranous shield.

The areas comprising at least one pre-punched marker can e.g. be formed as rectangles comprising three rows each comprising six pre-punched markers for certain devices like switchboards while two rows each comprising four pre-punched markers can be optimal for devices like outlets. However, the number of pre-punched markers in each area as well as the shape of the area as well as the number of areas comprising at least one pre-punched marker arranged per membranous shield can vary according to the specific device to be inserted.

Alternatively, the areas with at least one pre-punched marker can be formed as circles, ovals, squares etc. The form of the areas can as well be different for separate areas attached to the membrane i.e. one area is circular while another is rectangular on the same membrane. The number and form of pre-punched markers can vary depending on the lead-in to be inserted i.e. the area can comprise one, two, three or multiple pre-punched markers distributed arbitrarily over the area. The pre-punched markers can be circular, oval, rectangular etc. It is implicitly to be understood the number of pre-punched markers can be larger than the number of lead-ins and thus, not all of the pre-punched markers are to be used when installing a given device and the area will still prevent leakage.

Similarly, the place for the one or more pre-punched markers to be arranged is depending upon the specific device to be inserted e.g. where the lead-in is to be connected to the device. Thus, the one or more pre-punched markers can preferably be inserted at the sides or at the bottom or both of the membranous shields.

In a further embodiment, at least one slit is made from the edge of the membrane towards the area with the pre-punched markers. This at least one slit lightens the installation procedure.

The areas with the pre-punched markers can be arranged by the manufacturer or by the user or a combination, where the manufacturer installs some or pre-cuts the membrane where the area is to be arranged, while the user installs the remains of the needed areas by cutting the membrane himself. Advantageously, the membranous shield can be made as a kit where the formed membrane possibly with pre-cut areas comes with the areas with the pre-punched markers for the user to attach to the membrane.

It is preferred that the penetration of the lead-in is as close to the side of connection to the device as possible in order for the device to be fitted properly into the membranous shield. Hence, if the lead-in penetrates the membranous shield at the side and is to be connected with the device at the bottom of this, the lead-in has to be slid along the device from the side of it to the bottom. Hereby, the device is easily drawn lopsided during installation.

In a still further advantageous embodiment, said membrane is made from material selected from polyethylene, polyvinylchloride, polypropylene, or polyurethane.

The membrane of the membranous shield is preferably made from material similar to or assembling that of the vapour barrier. Hereby, the actions of the vapour barrier and the membranous shield during e.g. shifts in temperature will be similar and distortion between the vapour barrier and the membranous shield at the flange is less likely. Thus, leakages as a result of temperature shifts can be prevented.

Preferred types of material are polyethylene, polyvinylchloride, polyurethane, polypropylene.

This invention further describes a method for sealing devices; said device comprises an element and possibly one or more lead-ins, penetrating through vapour barriers by a membranous shield comprising steps of
a) obtaining an opening in the vapour barrier
b) inserting the membranous shield into the opening in the vapour barrier
c) attaching the outer flange of the membranous shield to the vapour barrier; hereby preventing leakage through said vapour barrier.

Furthermore, a method is described where said method further comprises a step of guiding said one or more lead-ins through said one or more pre-punched markers penetrating said membranous shield; hereby preventing leakage of said membranous shield by efficiently sealing said one or more lead-ins.

When installing different devices into e.g. walls and ceilings comprising a vapour barrier, the vapour barrier needs to be cut and an opening in the vapour barrier to be obtained. A membranous shield fitting the device, to be inserted, is used in order to obtain the size of opening in the vapour barrier. Preferably, this opening is of a similar size as the device to be inserted, and thus, a membranous shield at a size to exactly fit the device is preferred.

After a proper opening has been obtained, the membranous shield is inserted into the opening. If lead-ins like cables or wires are to be connected to the device these are preferably guided through the pre-punched markers during the insertion of the membranous shield or before the insertion depending on the length of the lead-ins. The lead-ins are correctly guided through the pre-punched markers either at the side(s) and/or at the bottom of the membranous shield dependent upon where to be connected with the device. Hereafter, the membranous shield is arranged properly into the opening of the vapour barrier.

The flange of the membranous shield is then attached to the vapour barrier via the means for attachment. Hereby, any leakage between the membranous shield and the vapour barrier is prevented.

If no lead-ins are to be connected with the device the membranous shield is inserted into the opening after this has been made and the flange of the membranous shield is attached to the vapour barrier.

When the devices are to be installed, these are inserted into the semi-open enclosure of the membranous shield and eventually connected to lead-ins guided through the membranous shield.

Alternatively, the membranous shield can be installed into the opening of the vapour barrier and the device installed where after lead-ins such as cables are punched through chosen pre-punched markers and connected to the device.

In an alternative method, at least one of the areas with the pre-punched markers can be attached to the membrane during the installation process. As an example, areas with pre-punched markers can be attached to the membrane at the bottom of the membranous shield before installation of the membranous shield into the opening in the vapour barrier and areas with pre-punched markers can be installed at the sides of the membrane after the device has been inserted into the membranous shield and lead-ins have been pulled from the outside of the membrane to the inside where the device is arranged. Hereafter, the lead-ins are pulled through pre-punched markers and the area with the pre-punched markers is attached to the membrane and the lead-ins to the device. Alternatively, a slit from the edge of the membrane to a pre-cut opening in the membrane, where the area with the pre-punched markers are to be attached, can lighten the process of finding and pulling the lead-ins from the outside to the inside.

This invention further describes the use of a membranous shield according to any of the preceding claims for sealing a penetration of outlets, sockets, cabinets, housings, and switchboards through the vapour barrier to prevent air flow through said vapour barrier due to said penetrations.

The membranous shields can beneficial be arranged around outlets, sockets, cabinets, housings, switchboards or similar examples of devices commonly found to penetrate through vapour barriers of floors, ceilings, and walls. However, the membranous shield can be used for any purpose which involves penetration of the vapour barrier like creating secret lockers, shelves inside a wall etc.

### Description of the Drawing

Figure 1 illustrates a front view of a membranous shield inserted into a wall,
Figure 2A illustrates a membranous shield made from one piece of membrane with six areas,
Figure 2B illustrates a membranous shield made from one piece of membrane with two areas and two slits,
Figure 2C illustrates a membranous shield with two areas and two slits to be moulded into a three-dimensional semi-open enclosure,
Figure 2D illustrates a membranous shield comprising a three-dimensionally shaped membrane and four areas with pre-punched markers to be attached to the membrane,
Figure 3 illustrates an area comprising multiple pre-punched markers,
Figure 4A illustrates a side view of a device inserted into a membranous shield,
Figure 4B illustrates a front view of a device inserted into a membranous shield.

### Detailed Description of the Invention

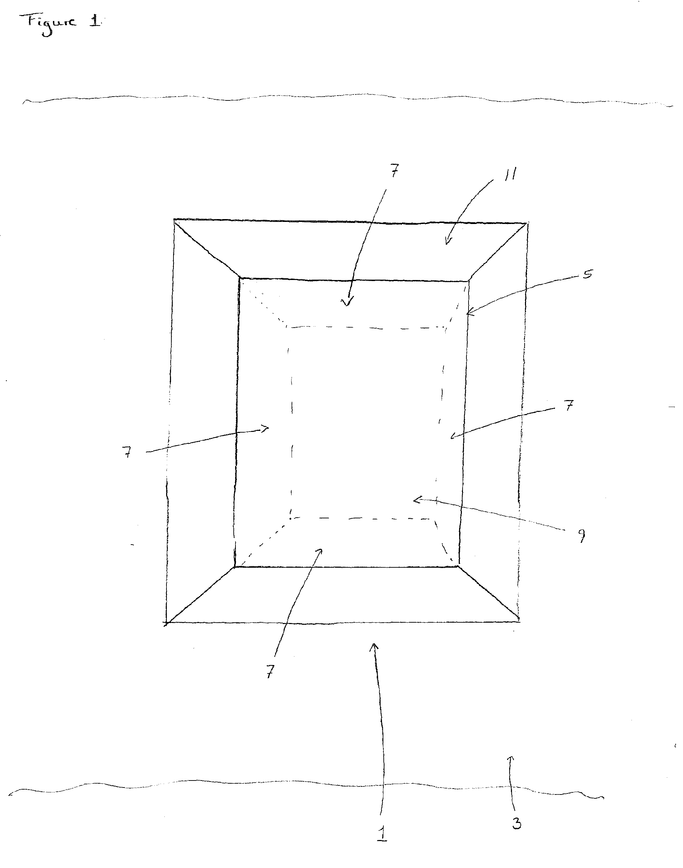

Figure 1 illustrates one embodiment of the invention. A membranous shield 1 is inserted into an opening of a vapour membrane 3. In this particular embodiment, the membranous shield 1 has a cross-section formed as a rectangle 5. Furthermore, the membranous shield comprises four sides 7 and a bottom 9 forming a three-dimensional shape. A flange 11 is connected to the sides 7, opposite to the bottom 9. The flange 11 is directed to the outside of the enclosure formed by the four sides 7 and the bottom 9 and is attached to the vapour barrier 3. The attachment between the vapour barrier 3 and the flange 11 prevents leakage of air and/or moisture past the vapour barrier 3.

This particular embodiment of the membranous shield 1 has a rectangular cross-section 5. The cross-section can, however, be formed in multiple different cross-sections like circular, square, oval, whichever shape fits the opening of the vapour barrier 3 the best and/or the shape of the device to be inserted such as a switchboard.

During installation a suitable opening is cut in the vapour barrier 3 and the membranous shield 1 is inserted into the opening. Finally, the flange 11 is attached properly to the vapour barrier 3 by the means of attachment e.g. an adhesive.

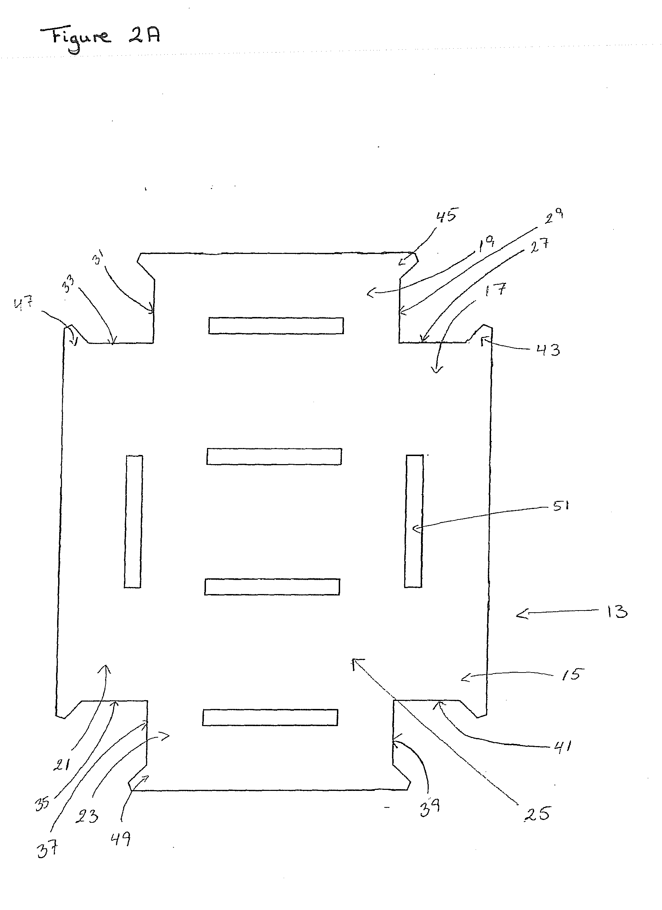

Figure 2A illustrates a membranous shield 13, which is not yet folded into a three-dimensional shape. In this particular embodiment, the membranous shield 13 is created from one piece of membrane 15 and is shaped to form a semi-open enclosure with a rectangular cross-section.

The membrane 15 comprises four sides 17, 19, 21, 23 and a bottom 25. During folding the edges between the sides are combined e.g. by welding the sides together. Hereby, is to be understood the edges 27 and 29 are combined, 31 and 33 are combined, 35 and 37 are combined, and 39 and 41 are combined, whereby a three-dimensionally shaped semi-open enclosure with a rectangular cross-section is formed. Furthermore, a flange 43, 45, 47, 49 is formed for attachment to the vapour barrier. The flange 43, 45, 47, 49 is formed of four separate parts 43, 45, 47, 49 connected to the sides 17, 19, 21, 23 opposite to the bottom 25 (43 is connected to 17, 45 is connected to 19, 47 is connected to 21, and 49 is connected to 23, respectively).

In this particular embodiment, six areas 51 are illustrated, one on each of the four sides 17, 19, 21, 23 and two at the bottom 25. The areas 51 illustrate possible sites for placement of areas with pre-punched markers. The areas 51 of the membrane 15 are cut out and replaced by areas with pre-punched markers. It is to be emphasized that the number of areas on the membranous shield 13 can be varied depending on the need. It is preferable that the number of areas is kept to a minimum.

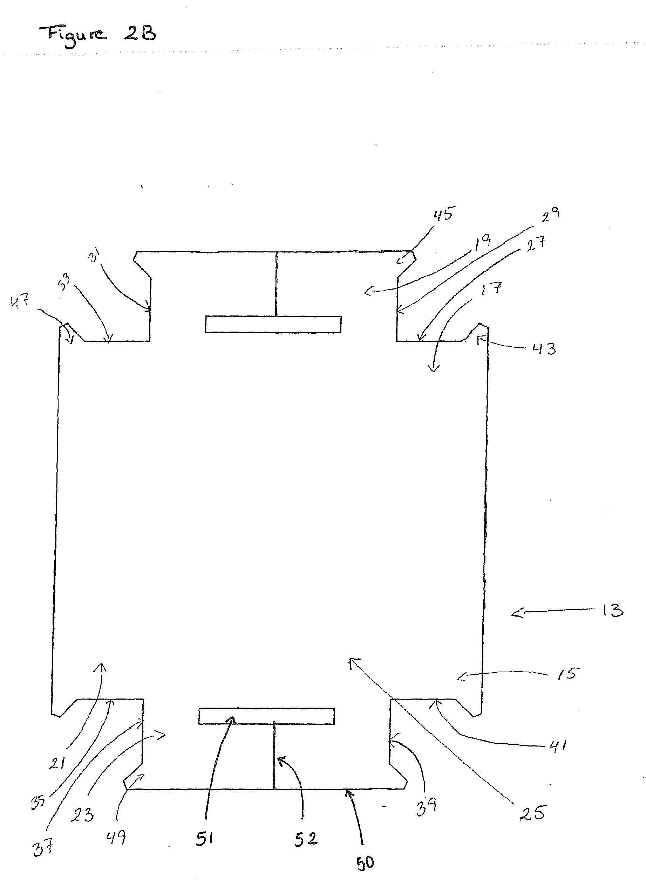

In Figure 2B is illustrated a further embodiment of a membranous shield 13 as described in Figure 2A. In Figure 2B only two areas 51 are illustrated, one on two sides 19, 23. In this embodiment, these two areas 51 are preferably cut during the manufacturing process while the user can cut more areas 51 if so wished.

From the edge 50 of the membrane 15 and to the areas 51 a slit 52 is made. This slit lightens the process of installing the membranous shield 13.

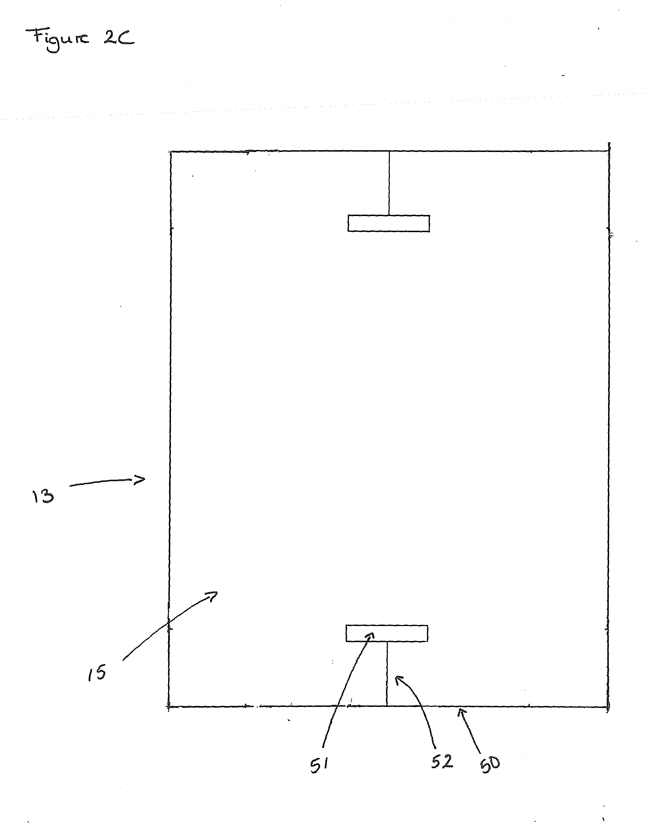

In Figure 2C is illustrated a further embodiment of a membranous shield 13 as described in Figure 2B. In this embodiment, the membranous shield 13 is illustrated by a membrane 15 with a rectangular shape and comprising two areas 51 and two slits 52. The piece of membrane 15 is moulded for example by vacuum moulding into a three-dimensionally shaped semi-open enclosure where the areas 51 will be arranged onto two of the sides of the semi-open enclosure. Areas with pre-punched markers are to be arranged onto the areas 51 of the membrane 15.

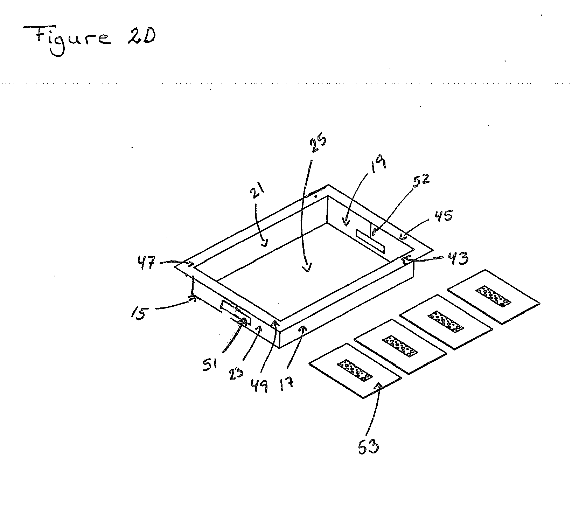

In Figure 2D illustrates the three-dimensionally shaped membrane 15 formed from either the membrane 15 as illustrated in Figure 2B or Figure 2C. The three-dimensionally shaped membrane 15 comprises a flange 43, 45, 47, 49 for attachment to a vapour barrier. The three-dimensionally shaped membrane 15 comprises sides 17, 19, 21, 23 and a bottom 25, which during use partly encloses a device such as a switchboard to prevent leakage.

Furthermore, four areas with pre-punched markers 53 are illustrated. These are to be attached to the membrane 15 to obtain the membranous shield in this particular embodiment. It is implicitly to be understood that the number of areas with pre-punched markers to be attached depends of the device to be installed and that any number of areas with pre-punched markers can be provided with the three-dimensionally shaped membrane.

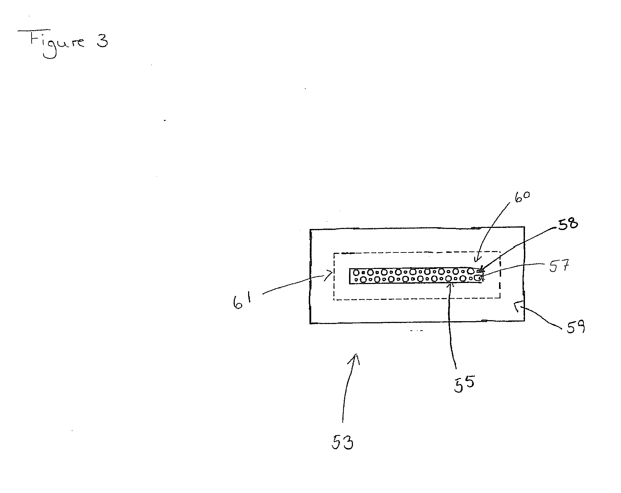

In Figure 3 is illustrated one embodiment of an area with pre-punched markers 53. The area with pre-punched markers 53 comprises a flexible and/or elastic area 55 where markers 57, 58 of one or more dimensions are pre-punched. In this embodiment, the markers 57, 58 are distributed in two rows with eighteen markers each. The pre-punched markers 57, 58 are arranged with two varying diameters, a minor 58 and a major 57, alternating along the row and from one row to the other. Preferably, the diameter is 3 mm and 7 mm.

Surrounding the flexible and/or elastic area 55 is an area without pre-punched markers 60 but preferably made from similar material as the flexible and/or elastic area 55 e.g. a single piece of material. The area without pre-punched markers 60 extend to the dotted line 61. The means for attachment is in this particular embodiment a vapour barrier tape 59, which extends from the flexible and/or elastic area 55 onto the membrane of the membranous shield. Preferably, the flexible and/or elastic area 55 is similar to the size of the opening cut in the membrane.

As an alternative vapour barrier tape with adhesive on both sides can be used as the means for attachment. In this case the vapour barrier tape would be attached beneath the area without pre-punched markers 60, and here through attach to the membrane. The flexibility and/or elasticity of the flexible and/or elastic area 55 with regard to the pre-punched markers result in an efficient sealing of lead-ins guided through the pre-punched markers 57. The diameter of the pre-punched markers 57 is slightly smaller than the diameter of the lead-ins e.g. wires or cables. Hereby, a tight sealing is obtained between the lead-in and the pre-punched marker 57, and the penetration is only possible without destroying the pre-punched marker 57 due to the flexibility of the material. Hence, lead-ins can penetrate the membranous shield without notable increase in the leakage of the membranous shield.

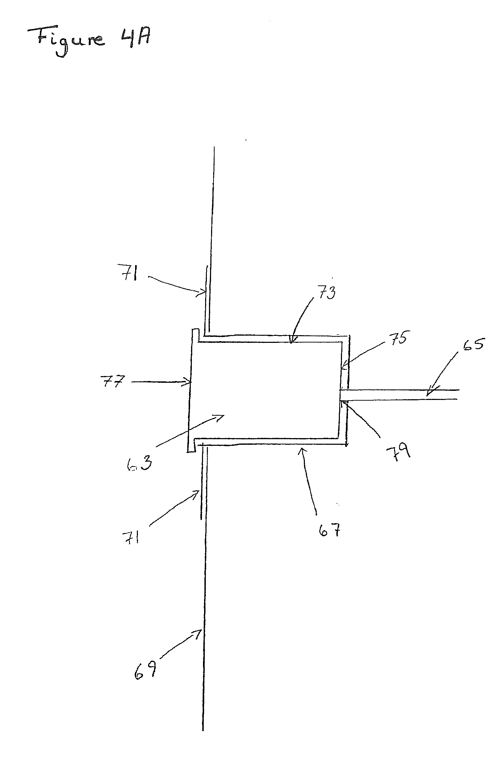

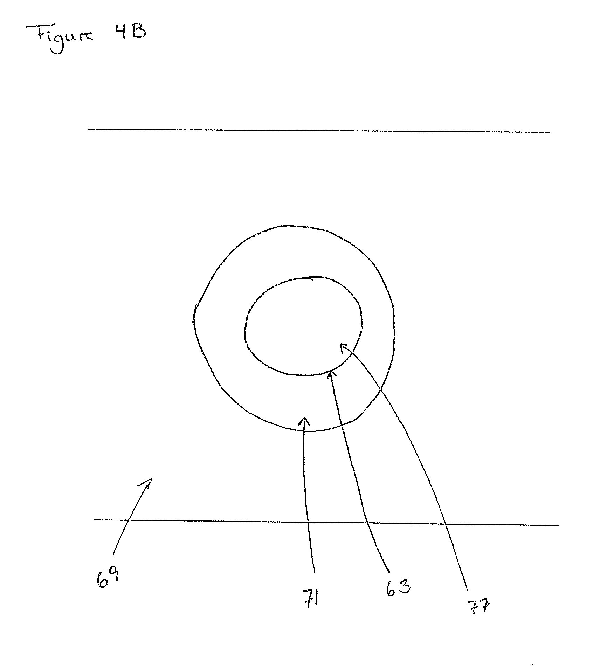

Figure 4A and Figure 4B illustrates a side view and a front view, respectively, of a device 63 to be inserted in a wall. It is to be understood that the figures are not to restrict the shape of the device 63 and membranous shield 67 to one form but that they can take other forms as well for example the front 77 of the device can be formed not as a circle but as an oval, a rectangle etc. and the flange 71 of the membranous shield can be of another shape than circular such as triangular, squared, rectangular etc.

The device 63 is connected to a cable (lead-in) 65 inserted into a membranous shield 67. The cable 65 penetrates the membranous shield 67 preferably through pre-punched markers. The membranous shield 67 is arranged in the opening in the vapour barrier 69 and forms an enclosure for the device 63. The flange 71 of the membranous shield 67 attaches to the vapour barrier 69 on both sides of the opening of the vapour barrier 69.

The direction of the flange 71 to the outside of the enclosure leaves an opening in the membranous shield 67 through which the device 63 can be inserted. After insertion of the device 63 it is shielded on the sides 73 and the bottom 75 of the membranous shield 67 leaving just the front 77 of the device 63 free. The front 77 of the device 63 is visible after the final creation of the walls, ceilings, and/or floors. Hence, the front 77 is not to be enclosed by the membranous shield 67 but only the part of the device penetrating the vapour barrier 69.

To install the device 63 and the membranous shield 67, first of all a proper membranous shield 67 is chosen, which fits the size of the device 63. Then an opening is cut in the vapour barrier 69, an opening which, preferably, is only slightly bigger than the cross-section of the membranous shield 67. The cable 65 is then guided through the pre-punched marker arranged on the membranous shield 67 closest to the final connection 79 between the device 63 and the cable 65. Due to the pre-punched nature of the marker, this is easily performed without any additional tools. It is to be understood that the cable 65 can as easily be guided from the inside of the membranous shield 67 to the outside as visa versa. Depending on the length of the cable 65 the penetration of the membranous shield 67 can be performed during any stage of the insertion of the membranous shield 67 into the opening of the vapour barrier 69. The membranous shield 67 is then inserted fully into the opening of the vapour barrier 69 till the flange 71 is flushed with the vapour barrier 69 and then attached hereto. The final elements of the wall are then mounted and the device 63 can be connected to the cable 65 and inserted into the membranous shield 67 before mounted to the wall.

## Claims

1. A membranous shield for sealing devices penetrating vapour barriers; said device comprises an element and possibly one or more lead-ins **characterised in that**
- said membranous shield comprises a membrane;
- said membrane is a three-dimensionally shaped element comprising sides connected to a bottom;
- said membrane further comprises an outer flange;
- said outer flange is two-dimensional and connected to said sides opposite to said bottom;
- said outer flange is provided with means for attachment to said vapour barrier.

2. The membranous shield for sealing devices penetrating through vapour barriers according to claim 1 **characterised in that** said three-dimensional shape has a cross-section comprising at least three edges such as a circle, an oval, a rectangle, a triangle or a square.

3. The membranous shield for sealing devices penetrating through vapour barriers according to claim 1 or 2 **characterised in that** said membranous shield is made from a single piece of membrane.

4. The membranous shield for sealing devices penetrating through vapour barriers according to any of the preceding claims **characterised in that** said membranous shield further comprises one or more flexible and/or elastic areas, where said flexible and/or elastic areas comprises one or more pre-punched markers, said pre-punched marker is punched partly through the flexible and/or elastic area, preferably 50%, and that said one or more pre-punched markers are slightly smaller than said one or more lead-ins; said one or more lead-ins penetrates said membranous shield.

5. The membranous shield for sealing devices penetrating through vapour barriers according to claim 4 **characterised in that** said one or more pre-punched markers are arranged in a separate material; said separate material is attached to said membrane.

6. The membranous shield for sealing devices penetrating through vapour barriers according to claim 4 or 5 **characterised in that** said one or more pre-punched markers are arranged at the sides and/or bottom of said membranous shield.

7. The membranous shield for sealing devices penetrating through vapour barriers according to any of the preceding claims **characterised in that** said membrane is made from material selected from polyethylene, polyvinylchloride, polypropylene or polyurethane.

8. A method for sealing devices said device comprises an element and possibly one or more lead-ins, penetrating through vapour barriers by a membranous shield according to any of the preceding claims comprising steps of
a) obtaining an opening in the vapour barrier
b) inserting the membranous shield into the opening in the vapour barrier
c) attaching the outer flange of the membranous shield to the vapour barrier; hereby preventing leakage through said vapour barrier.

9. The method for sealing devices penetrating through vapour barriers according to claim 8 **characterised in that** said method further comprises a step of guiding said one or more lead-ins through said one or more pre-punched markers penetrating said membranous shield; hereby preventing leakage of said membranous shield by efficiently sealing said one or more lead-ins.

10. Use of a membranous shield according to any of the claims 1-7 for sealing a penetration of outlets, sockets, cabinets, housings, and switchboards through the vapour barrier to prevent air flow through said vapour barrier due to said penetrations.
